# EUROPÄISCHE PATENTSCHRIFT

(11) **EP 3 740 387 B1**
(45) Veröffentlichungstag und Bekanntmachung des Hinweises auf die Patenterteilung: **25.12.2024**
(21) Anmeldenummer: 18800479.0
(22) Anmeldetag: 16.10.2018
(51) Int. Cl.: B60C 23/04, H01Q 1/22, G06K 19/077, B29D 30/00, H01Q 1/36, H01Q 9/28

(54) **VERFAHREN ZUR HERSTELLUNG EINES TRANSPONDERS FÜR EINEN FAHRZEUGREIFEN**
METHOD FOR PRODUCING A TRANSPONDER FOR A VEHICLE TYRE
PROCÉDÉ POUR LA FABRICATION D'UN TRANSPONDEUR POUR UN PNEU DE VÉHICULE

(30) Priorität: 15.01.2018 DE 102018200556
(43) Veröffentlichungstag der Anmeldung: 25.11.2020
(73) Patentinhaber: Continental Reifen Deutschland GmbH, 30175 Hannover (DE)
(72) Erfinder: EHMKE, Tobias, 30419 Hannover (DE); KURZ, Martin, 30419 Hannover (DE)
(74) Vertreter: Continental Corporation
(86) Internationale Anmeldenummer: PCT/EP2018/078141
(87) Internationale Veröffentlichungsnummer: WO 2019/137644

(56) Entgegenhaltungen:
- WO-A1-03/105511
- WO-A1-2008/132287
- US-A- 4 911 217
- US-A1- 2017 270 401
- US-A1- 2017 358 839

## Beschreibung

Die Erfindung betrifft ein Verfahren zur Herstellung eines Transponders für einen Fahrzeugreifen.

Es ist bekannt, Fahrzeugreifen mit Transpondern zu versehen.

Aus dem Stand der Technik sind unterschiedliche Konzepte bekannt, Transponder am Reifen anzuordnen. Alle herkömmlichen Konzepte besitzen unterschiedliche Nachteile.

Die US 2017/358839 A1 , WO 03/105511 A1, WO 2008/132287 A1 und US 4 911 217 A offenbaren RFID Tags, welche zur Identifizierung von Reifen oder Reifenteilen verwendet werden. Auch die US 2017 / 270401 A1 offenbart die Verwendung von RFID Tags, jedoch zur Identifizierung von Kleidungs- bzw. Wäscheteilen.

Der Erfindung liegt die Aufgabe zugrunde, das Anordnen von Transpondern an Fahrzeugreifen zu verbessern.

Gelöst wird die Aufgabe gemäß einem Verfahren mit den folgenden Schritten:
a) Bereitstellen einer dünnen Metallplatte,
b) Herstellen von mindestens einer Flachantenne,
   wobei die Flachantenne aus der Metallplatte geformt wird,
c) Verbinden der Flachantenne mit einem Transponder-Chip,
   wobei der Transponder aus Flachantenne und Transponder-Chip gebildet wird,
d) Herstellen eines Fahrzeugreifens,
   wobei der Transponder mit der Flachantenne bei der Herstellung eines Reifenrohlings auf ein Reifenbauteil aufgebracht wird,
   wobei der Transponder zwischen zwei Reifenbauteilen eingebettet wird,
e) Fertigstellen des Fahrzeugreifen mit weiteren Schritten.

Ein Vorteil der Erfindung ist insbesondere darin zu sehen, dass auf diese Weise Transponder im Fahrzeugreifen auf einfache Weise angeordnet werden können. Bei dem Reifenbauteil kann es sich beispielsweise um ein Bauteil handeln, welches als eine Materiallage für den Reifenwulst vorgesehen ist.

Ein weiterer Vorteil von Flachantennen besteht darin, dass sie sich einfach herstellen lassen und sich besonders gut für den Einsatz für Fahrzeugreifen eignen. Insbesondere durch die flache Struktur der Flachantennen lassen sie sich einfach zwischen Reifenbauteilen beispielsweise im Reifenwulst anordnen. Die Flachantennen besitzen außerdem eine hohe Dauerhaltbarkeit in Bezug auf die Reifendeformationen, die beim Abrollen des Fahrzeugreifens auf einer Fahrbahn auftreten.

Erfindungsgemäß ist vorgesehen, dass bei Schritt a) die dünne Metallplatte aus Messing oder Messinglegierung besteht.

Flachantennen aus Messing bzw. aus einer Messinglegierung lassen sich besonders gut mit dem Gummimaterial der Reifenbauteile verbinden. Dadurch lassen sich Lufteinschlüsse zwischen dem Transponder und einzelnen Reifenbauteilen effektiv verhindern.

Erfindungsgemäß ist vorgesehen, dass bei Schritt a) die Metallplatte eine Materialdicke von kleiner als 1 mm aufweist.

Durch diese sehr dünne Ausgestaltung der Flachantenne lässt sich der Transponder einfach mit einem anliegenden Reifenbauteil verbinden. Außerdem wird dadurch verhindert, dass Reifenbauteile beschädigt werden können.

Erfindungsgemäß ist vorgesehen, dass nach Schritt c) die Oberflächen des Transponders mit einem Haftvermittler versehen werden.

Der Haftvermittler bewirkt eine optimale Verbindung zwischen den Reifenbauteilen und dem Transponder. Auf diese Weise werden insbesondere Lufteinschlüsse zwischen dem Transponder und den anliegenden Reifenbauteilen verhindert.

In einer weiteren vorteilhaften Weiterbildung der Erfindung ist vorgesehen, dass der Haftvermittler mit einem Tauchverfahren oder einem Aufstreich-Verfahren auf den Transponder aufgebracht wird.

Durch diese beiden Verfahren lässt sich der Haftvermittler mit einer hohen Geschwindigkeit auf den Transponder aufbringen.

Erfindungsgemäß ist vorgesehen, dass bei Schritt b) das Formen der Antenne mit einem Stanzprozess erfolgt.

Dadurch können die einzelnen Flachantennen mit einer hohen Geschwindigkeit und mit einer hohen Genauigkeit hergestellt werden.

In einer erfindungsgemäßen Alternative ist vorgesehen, dass bei Schritt b) das Formen der Antenne mit einem Laserstrahlschneiden oder einem Wasserstrahlschneiden erfolgt.

Mit diesen beiden Herstellverfahren können die Flachantennen mit einer hohen Präzision gefertigt werden.

In einer weiteren vorteilhaften Weiterbildung der Erfindung ist vorgesehen, dass nach Schritt b) die Flachantenne eine rechteckige Kontur, eine mäanderförmige Kontur oder eine dreieckförmige Kontur aufweist.

Diese Antennenformen bzw. Antennenkonturen lassen sich besonders einfach und schnell herstellen. Außerdem gewährleisten diese Antennenkonturen eine optimale Übertragungsqualität zur Sende- und Empfangseinheit.

In einer weiteren vorteilhaften Weiterbildung der Erfindung ist vorgesehen, dass bei Schritt c) die Flachantenne mit einer Lötverbindung mit dem Transponder-Chip verbunden wird. Dadurch lässt sich eine hochfeste Verbindung zwischen dem Transponderchip und den Flachantennen erreichen.

In einer weiteren vorteilhaften Weiterbildung der Erfindung ist vorgesehen, dass bei Schritt c) die Flachantenne induktiv mit dem Transponder-Chip verbunden wird.

Dadruch lässt sich der Transponderchip einfach und schnell mit den beiden anliegenden Flachantennen verbinden.

In einer weiteren vorteilhaften Weiterbildung der Erfindung ist vorgesehen, dass bei Schritt d) das Aufbringen des Transponders auf das Reifenbauteil in den Herstellungsprozeß zur Herstellung des Reifenbauteiles in Form von Vormaterial integriert ist.

Dadurch wird die Zykluszeit an den Reifenbaumaschinen bzw. an den Reifenbautrommeln nicht beeinträchtigt.

In einer weiteren vorteilhaften Weiterbildung der Erfindung ist vorgesehen, dass der Transponder im Bereich des Reifenwulstes angeordnet ist.

Der Reifenwulst eignet sich besonders für die Platzierung von Transpondern, weil die Dauerbelastung in diesem Bereich des Fahrzeugreifens relativ gering ist. Der Transponder kann jedoch auch in der Seitenwand oder im Bereich des Laufstreifens angeordnet sein.

In einer vorteilhaften Weiterbildung der Erfindung ist vorgesehen, dass die Höhenabmessung in radialer Richtung des Fahrzeugreifens zwischen dem Transponder und der oberen Spitze des Kernreiters mindestens 5 mm beträgt.

Dadurch ist der Transponder in einem Bereich des Reifenwulstes angeordnet in dem die mechanische Beanspruchung im Fahrbetrieb des Fahrzeugreifens relativ gering ist.

In einer weiteren vorteilhaften Weiterbildung der Erfindung ist vorgesehen, dass der Transponder auf der zur Seitenwand gerichteten Außenseite des Kernreiters angeordnet ist. Dadurch läßt sich von außen eine einfache Funkverbindung mit einer hohen Signalqualität zum Transponder realisieren.

In einer vorteilhaften Weiterbildung der Erfindung ist vorgesehen, dass der Transponder mit seinen beiden Antennenteilen in Umfangsrichtung zum Reifenkern ausgerichtet ist. Dadurch besitzt der Transponder eine optimale Ausrichtung im Reifenwulst, um eine optimale Sende- und Empfangsleistung zu gewährleisten.

In einer weiteren vorteilhaften Weiterbildung der Erfindung ist vorgesehen, dass der Transponder eine Breite zwischen 3 und 15 mm sowie eine Länge zwischen 30 und 80 mm aufweist.

Bei diesen Abmessungen des Transponders lässt sich dieser auf einfache Weise zwischen den Reifenbauteilen anordnen.

Anhand mehrerer Ausführungsbeispiele soll die Erfindung näher erläutert werden. Es zeigen:
- Fig. 1:: einen Reifenwulst
- Fig. 2:: einen Transponder mit zwei rechteckförmigen Flachantennen
- Fig. 3:: einen Transponder mit zwei mäanderförmigen Flachantennen
- Fig. 4:: einen Transponder mit zwei dreieckförmigen Flachantennen

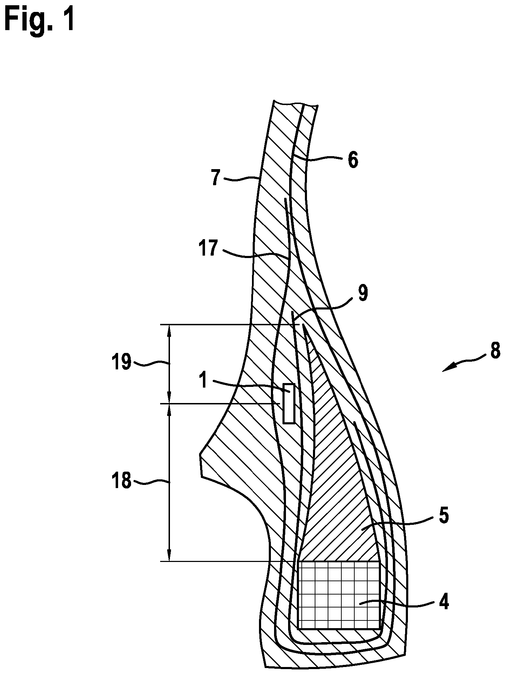

Die Figur 1 zeigt schematisch den Querschnitt eines Reifenwulstes 8. Bei diesem Ausführungsbeispiel ist der Transponder 1 im Reifenwulst 8 angeordnet. Der Transponder kann auch an anderen Stellen im Fahrzeugreifen angeordnet sein. Weitere bevorzugte Positionen für Transponder sind Bereiche der Seitenwand, Bereiche des Laufstreifens oder aber Bereiche in der Gürtellage des Fahrzeugreifens. Der Transponder 1 ist im Reifenwulst z. B. zwischen dem Kernreiter 5 und dem äußeren Lagenumschlag 17 der Karkasslage 6 angeordnet. Die Karkasslage 6 bildet im Reifenwulst 8 einen Lagenumschlag 17, der um den Kernreiter 5 und den Reifenkern 4 herumgeführt ist. Der Reifenkern 4 umfasst eine Vielzahl von Drahtkernen und hat daher eine sehr hohe Materialsteifigkeit. Durch diese Materialsteifigkeit des Reifenkerns ist der Transponder in einer besonders beruhigten Materialzone des Fahrzeugreifens angeordnet, die nur geringen Materialbelastungen ausgesetzt ist.

Um den Kernreiter 5 und den Reifernkern 4 ist optional eine zusätzliche Gummilage 9 angeordnet, die ebenfalls als "Flipper-Bauteil" bezeichnet wird.

Bei dieser zweiten Ausführung ist der Transponder 1 zwischen der Gummilage 9 und dem Lagenumschlag 9 angeordnet.

Die Höhe 18 zwischen Transponder 1 und Unterseite des Kernreiters 5 beträgt mindestens 3 mm, vorzugsweise mindestens 5 mm oder mindestens 7 mm. Durch die höhere Positionierung des Transponders 1 läßt sich die Signalübertragung zum Empfangsgerät besser realisieren.

Außerdem beträgt die Höhe 19 zwischen Transponder 1 und der Spitze des Kernreiters 5 mindestens 5 mm, vorzugsweise mindestens 7 mm oder mindestens 9 mm.

Die Daten des Transponders lassen sich dadurch sehr gut mit einem externen Lesegerät auslesen.

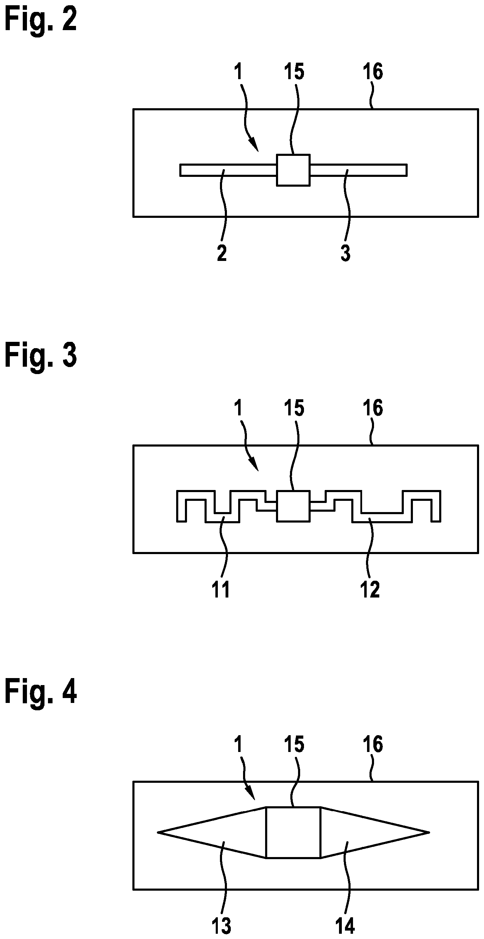

Die Fig. 2 zeigt den Transponder 1 wie er auf einem Reifenbauteil angeordnet ist. Der Transponder 1 und das Reifenbauteil 16 sind in einer Aufsicht dargestellt. Der Transponder 1 umfasst zwei rechteckförmige Flachantennen 2 und 3. Die Flachantennen werden in einem separaten Herstellungsprozess hergestellt. Sie werden beispielsweise mit einem Stanzprozess aus einer dünnen Metallplatte erzeugt. Nach der Konfektionierung der beiden Flachantennen, werden diese mit dem Transponderchip 15 verbunden. Auf diese Weise wird ein Transponder mit einer Dipolantenne gebildet.

Das Anbinden der beiden Flachantennen an den Transponderchip 15 kann beispielsweise mit einem Lötverfahren erfolgen. Die Flachantennen bestehen erfindungsgemäß aus Messing oder einer Messinglegierung. Dadurch wird eine optimale Anbindung an das Reifenbauteil 16 erreicht. Bei dem Reifenbauteil 16 kann es sich beispielsweise um eine Karkasslage handeln oder um ein Reifenbauteil für einen Reifenwulst. Der Tranpsonder 1 wird vorzugsweise bei der Vormaterialherstellung auf das Reifenbauteil 16 aufgelegt. Nach der Herstellung des Fahrzeugreifens ist der Transponder 1 zwischen einzelnen Reifenbauteilen angeordnet. Eine mögliche Anordnung des Transponders 1 zeigt die Fig. 1.

Die Fig. 3 zeigt ein weiteres Ausführungsbeispiel- Bei diesem Ausführungsbeispiel sind die Flachantennen 11 und 12 mit einer mäanderförmigen Kontur ausgeführt.

Die Fig. 4 zeigt ein weiteres Ausführungsbeispiel. Bei dieser Ausführung besitzt der Transponder 1 zwei Flachantennen 13 und 14 mit einer dreieckförmigen Kontur. Der Transponder 1 wird ohne eine Einbettung in eine Folie direkt auf das darunterliegende Reifenbauteil 16 angeordnet. Die Längenabmessung des Tranponders beträgt zwischen 30 und 90 mm. Die Materialdicke der Flachantennen beträgt maximal 1 mm. Erfindungsgemäß besitzen die Flachantennen eine Materialdicke von kleiner als 0,5 mm.

### Bezugszeichenliste

### (ist Teil der Beschreibung)

- 1: Transponder
- 2: linke Antenne bzw. Flachantenne mit rechteckförmiger Kontur
- 3: rechte Antenne bzw. Flachantenne mit rechteckförmiger Kontur
- 4: Reifenkern
- 5: Kernreiter bzw. Apex
- 6: Karkasslage
- 7: Seitenwand
- 8: Reifenwulst
- 9: Gummilage
- 10: Transponder, bzw. RFID-Transponder
- 11: linke Antenne bzw. Flachantenne mit mäanderförmiger Kontur
- 12: rechte Antenne bzw. Flachantenne mit mäanderförmiger Kontur
- 13: linke Antenne bzw. Flachantenne mit dreieckförmiger Kontur
- 14: rechte Antenne bzw. Flachantenne mit dreieckförmiger Kontur
- 15: Transponder-Chip
- 16: Reifenbauteil (z.B. Karkasslage)
- 17: Äußere Lagenumschlag der Karkasslage
- 18: Höhe zwischen Transponder und Unterseite des Kernreiters
- 19: Höhe zwischen Transponder und Spitze des Kernreiters

## Patentansprüche

1. Verfahren zur Herstellung eines Transponders (1) für einen Fahrzeugreifen mit folgenden Schritten:
a) Bereitstellen einer dünnen Metallplatte,
b) Herstellen von mindestens einer Flachantenne (2, 3, 11, 12, 13, 14),
wobei die Flachantenne (2, 3, 11, 12, 13, 14) aus der Metallplatte geformt wird,
c) Verbinden der Flachantenne (2, 3, 11, 12, 13, 14) mit einem Transponder-Chip (15), wobei der Transponder (1) aus Flachantenne (2, 3, 11, 12, 13, 14) und Transponder-Chip (15) gebildet wird,
d) Herstellen eines Fahrzeugreifens,
wobei der Transponder (1) mit der Flachantenne (2, 3, 11, 12, 13, 14) bei der Herstellung eines Reifenrohlings auf ein Reifenbauteil (16) aufgebracht wird,
wobei der Transponder (1) zwischen zwei Reifenbauteilen eingebettet wird,
e) Fertigstellen des Fahrzeugreifen mit weiteren Schritten,
**dadurch gekennzeichnet, dass**
bei Schritt a) die dünne Metallplatte aus Messing oder einer Messinglegierung besteht, bei Schritt a) die Metallplatte eine Materialdicke von kleiner als 1 mm aufweist,
bei Schritt b) das Formen der Antenne (2, 3, 11, 12, 13, 14) mit einem Stanzprozess oder mit einem Laserstrahlschneiden oder mit einem Wasserstrahlschneiden erfolgt, und nach Schritt c) die Oberflächen des Transponders (1) mit einem Haftvermittler versehen werden.

2. Verfahren nach einem der vorhergehenden Ansprüche
**dadurch gekennzeichnet, dass**
bei Schritt a) die Metallplatte eine Materialdicke von kleiner als 0,5 mm aufweist.

3. Verfahren nach einem der vorhergehenden Ansprüche
**dadurch gekennzeichnet, dass**
der Haftvermittler mit einem Tauchverfahren oder einem Aufstreich-Verfahren auf den Transponder (1) aufgebracht wird.

4. Verfahren nach einem der vorhergehenden Ansprüche
**dadurch gekennzeichnet, dass**
nach Schritt b) die Flachantenne (2, 3, 11, 12, 13, 14) eine rechteckige Kontur, eine mäanderförmige Kontur oder eine dreieckförmige Kontur aufweist.

5. Verfahren nach einem der vorhergehenden Ansprüche
**dadurch gekennzeichnet, dass**
bei Schritt c) die Flachantenne (2, 3, 11, 12, 13, 14) mit einer Lötverbindung mit dem Transponder-Chip (16) verbunden wird.

6. Verfahren nach einem der vorhergehenden Ansprüche
**dadurch gekennzeichnet, dass**
bei Schritt c) die Flachantenne (2, 3, 11, 12, 13, 14) induktiv mit dem Transponder-Chip (16) verbunden wird.

7. Verfahren nach einem der vorhergehenden Ansprüche
**dadurch gekennzeichnet, dass**
bei Schritt d) das Aufbringen des Transponders (1) auf das Reifenbauteil (16) in den Herstellungsprozeß zur Herstellung des Reifenbauteiles (16) in Form von Vormaterial integriert sind.

8. Fahrzeugreifen mit einem Laufstreifen, einem Reifengürtel, einer Reifenkarkasse mit mindestens einer Karkasslage, Seitenwänden (7) und einem Reifenwulst (8) mit einem Reifenkern (4) sowie einem Kernreiter (5), wobei zwischen zwei Reifenbauteilen ein Transponder (1) eingebettet ist, wobei der Transponder (1) einen Transponderchip (15) und eine an den Transponderchip (15) angebundende Antenne aufweist, wobei die Antenne in Form einer Flachantenne (2, 3, 11, 12, 13, 14) ausgebildet ist und der Transponder (1) gemäß den Schritten a) bis c) nach Anspruch 1 hergestellt ist, wobei die Oberflächen des Transponders (1) mit einem Haftvermittler versehen sind.

## Claims

1. Method for producing a transponder (1) for a vehicle tyre, with the following steps:
a) providing a thin metal plate,
b) producing at least one flat antenna (2, 3, 11, 12, 13, 14), the flat antenna (2, 3, 11, 12, 13, 14) being formed from the metal plate,
c) connecting the flat antenna (2, 3, 11, 12, 13, 14) to a transponder chip (15), the transponder (1) being formed by the flat antenna (2, 3, 11, 12, 13, 14) and the transponder chip (15),
d) producing a vehicle tyre,
the transponder (1) with the flat antenna (2, 3, 11, 12, 13, 14) being applied to a tyre component (16) during the production of a green tyre,
the transponder (1) being embedded between two tyre components,
e) completing the vehicle tyre by further steps,
**characterized in that**
in step a), the thin metal plate consists of brass or a brass alloy,
in step a), the metal plate has a material thickness of less than 1 mm,
in step b), the forming of the antenna (2, 3, 11, 12, 13, 14) is performed by a punching process or by laser-beam cutting or by water-jet cutting,
and, after step c), the surfaces of the transponder (1) are provided with an adhesion promoter.

2. Method according to one of the preceding claims,
**characterized in that**
in step a), the metal plate has a material thickness of less than 0.5 mm.

3. Method according to one of the preceding claims,
**characterized in that**
the adhesion promoter is applied to the transponder (1) by a dipping process or a spreading process.

4. Method according to one of the preceding claims,
**characterized in that**
after step b), the flat antenna (2, 3, 11, 12, 13, 14) has a rectangular contour, a meandering contour or a triangular contour.

5. Method according to one of the preceding claims,
**characterized in that**
in step c), the flat antenna (2, 3, 11, 12, 13, 14) is connected to the transponder chip (16) by a solder connection.

6. Method according to one of the preceding claims,
**characterized in that**
in step c), the flat antenna (2, 3, 11, 12, 13, 14) is connected to the transponder chip (16) inductively.

7. Method according to one of the preceding claims,
**characterized in that**
in step d), the application of the transponder (1) to the tyre component (16) is integrated in the production process for producing the tyre component (16) in the form of precursor material.

8. Vehicle tyre comprising a tread, a breaker belt, a tyre carcass with at least one carcass ply, sidewalls (7) and a tyre bead (8) with a bead core (4) and a bead filler (5), a transponder (1) being embedded between two tyre components, the transponder (1) having a transponder chip (15) and an antenna attached to the transponder chip (15), the antenna taking the form of a flat antenna (2, 3, 11, 12, 13, 14) and the transponder (1) having been produced by steps a) to c) according to Claim 1, with the surfaces of the transponder (1) being provided with an adhesion promoter.

## Revendications

1. Procédé de fabrication d'un transpondeur (1) pour un pneu de véhicule, avec les étapes suivantes :
a) la fourniture d'une plaque métallique mince,
b) la fabrication d'au moins une antenne plate (2, 3, 11, 12, 13, 14), l'antenne plate (2, 3, 11, 12, 13, 14) étant formée à partir de la plaque métallique,
c) la liaison de l'antenne plate (2, 3, 11, 12, 13, 14) à une puce de transpondeur (15), le transpondeur (1) étant formé par l'antenne plate (2, 3, 11, 12, 13, 14) et la puce de transpondeur (15),
d) la fabrication d'un pneu de véhicule,
le transpondeur (1) avec l'antenne plate (2, 3, 11, 12, 13, 14) étant appliqué sur un composant de pneu (16) lors de la fabrication d'une ébauche de pneu,
le transpondeur (1) étant encastré entre deux composants de pneu,
e) la finalisation du pneu de véhicule avec d'autres étapes,
**caractérisé en ce**
**qu'**à l'étape a), la plaque métallique mince est constituée de laiton ou d'un alliage de laiton,
**qu'**à l'étape a), la plaque métallique présente une épaisseur de matériau inférieure à 1 mm,
**qu'**à l'étape b), la formation de l'antenne (2, 3, 11, 12, 13, 14) est effectuée par un processus de poinçonnage ou par une découpe au laser ou par une découpe au jet d'eau,
et après l'étape c), les surfaces du transpondeur (1) sont pourvues d'un promoteur d'adhésion.

2. Procédé selon l'une quelconque des revendications précédentes,
**caractérisé en ce**
**qu'**à l'étape a), la plaque métallique présente une épaisseur de matériau inférieure à 0,5 mm.

3. Procédé selon l'une quelconque des revendications précédentes,
**caractérisé en ce que**
le promoteur d'adhésion est appliqué sur le transpondeur (1) par un procédé d'immersion ou par un procédé d'enduction.

4. Procédé selon l'une quelconque des revendications précédentes,
**caractérisé en ce**
**qu'**après l'étape b), l'antenne plate (2, 3, 11, 12, 13, 14) présente un contour rectangulaire, un contour en forme de méandres ou un contour triangulaire.

5. Procédé selon l'une quelconque des revendications précédentes,
**caractérisé en ce**
**qu'**à l'étape c), l'antenne plate (2, 3, 11, 12, 13, 14) est reliée à la puce de transpondeur (16) par une liaison brasée.

6. Procédé selon l'une quelconque des revendications précédentes,
**caractérisé en ce**
**qu'**à l'étape c), l'antenne plate (2, 3, 11, 12, 13, 14) est reliée par induction à la puce de transpondeur (16).

7. Procédé selon l'une quelconque des revendications précédentes,
**caractérisé en ce**
**qu'**à l'étape d), l'application du transpondeur (1) sur le composant de pneu (16) est intégrée dans le processus de fabrication pour la fabrication du composant de pneu (16) sous forme de matière première.

8. Pneu de véhicule avec une bande de roulement, une ceinture de pneu, une carcasse de pneu avec au moins une couche de carcasse, des flancs (7) et un talon de pneu (8) avec une âme de pneu (4) ainsi qu'un bourrage sur tringle (5), un transpondeur (1) étant encastré entre deux composants de pneu, le transpondeur (1) présentant une puce de transpondeur (15) et une antenne reliée à la puce de transpondeur (15), l'antenne étant réalisée sous la forme d'une antenne plate (2, 3, 11, 12, 13, 14) et le transpondeur (1) étant fabriqué selon les étapes a) à c) de la revendication 1, les surfaces du transpondeur (1) étant pourvues d'un promoteur d'adhésion.
